# EUROPÄISCHE PATENTSCHRIFT

(11) **EP 0 660 108 B1**
(45) Veröffentlichungstag und Bekanntmachung des Hinweises auf die Patenterteilung: **28.04.1999**
(21) Anmeldenummer: 94120215.2
(22) Anmeldetag: 20.12.1994
(51) Int. Cl.: G01B 11/10, G01N 21/88

(54) **Optische(s) Messvorrichtung und -verfahren**
Optical measurement apparatus and method
Appareil et procédé de mesure optique

(30) Priorität: 20.12.1993 DE 4343548
(43) Veröffentlichungstag der Anmeldung: 28.06.1995
(73) Patentinhaber: AGIE SA, 6616 Losone (CH)
(72) Erfinder: Bertholds, Axel, Dr., CH-6654 Cavigliano (CH); Braunschweiler, Andreas, CH-6614 Brissago (CH)
(74) Vertreter: Turi, Michael, Dipl.-Phys.

(56) Entgegenhaltungen:
- EP-A- 0 322 470
- EP-A- 0 565 090
- EP-B- 0 312 056
- BE-A- 1 003 275

## Beschreibung

Die Erfindung betrifft eine optische Meßvorrichtung zur Bestimmung der Form und/oder Lage eines in die Meßvorrichtung eingeführten bzw. durchführbaren Gegenstandes, insbesondere eines vorspulbaren drahtartigen Gegenstandes wie z.B. ein Erodierdraht oder ein fiberoptischer Leiter, gemäß dem Oberbegriff des Anspruchs 1. Des weiteren betrifft die Erfindung ein entsprechendes Verfahren.

Aus der gattungsgemäßen EP 0 312 056 B1 ist auf dem technischen Gebiet der Elektroerosion eine optische Meßvorrichtung zur Bestimmung der Drahtlage beim funkenerosiven Schneiden bekannt. Diese Meßvorrichtung weist ein Meßpaar mit einer Lichtquelle und einem Lichtdetektor auf. Die Lichtdetektor ist derart ausgebildet, daß er eine von der Lage des Erodierdrahtes eindeutig umkehrbar abhängige Lichtmenge absorbiert. Die das Licht absorbierende Fläche des Lichtdetektors hat dabei eine sich streng monoton ändernde geometrische Gestalt, wodurch ein im mathematischen Sinne umkehrbar eindeutiger Zusammenhang zwischen der Auslenkung der Laufdrahtelektrode und der absorbierten Lichtmenge erreicht wird. Über diesen Zusammenhang ist wiederum eine Bestimmung der Drahtlage möglich. Mit dieser Meßvorrichtung ist es prinzipiell auch möglich, die Form des Gegenstandes zu vermessen Allerdings ist die Auflösung, Linearität oder der tatsächliche Meßbereich für manche Anwendungen nicht zufriedenstellend.

Aus der EP 0 565 090 A1 ist eine optische Meßvorrichtung zur Messung der Abmessung eines Objektes in mehreren Richtungen bekannt. In dieser bekannten Meßvorrichtung wird je ein Lichtstrahl in der zu messenden Richtung über das Objekt abgelenkt. Aus der Dauer der Unterbrechung bzw. Abschattung des Lichtstrahls durch das Objekt wird auf dessen Abmessung geschlossen. Es handelt sich bei dieser Meßvorrichtung aber um eine sehr aufwendige Meßvorrichtung, deren Auflösung sehr beschränkt ist, da der Lichtstrahl in der zu messenden Richtung von einem ortsauflösenden Lichtdetektor abgescannt werden muß. Auch die maximale Meßfrequenz ist durch die Abscan-Frequenz begrenzt.

Die BE-A-10 03 275 beschreibt einen optischen Sensor zur Messung des Durchmessers eines drahtartigen Gegenstandes. Hierzu weist diese Meßvorrichtung eine Lichtquelle auf, die einen Lichtstrahl aussendet, der auf einen Lichtdetektor trifft. In dem Lichtstrahlengang sind ferner eine Überdruckkammer in Form eines länglichen Rohres, mehrere Linsen, und eine Meßblende angeordnet. Die Überdruckkammer dient einem Schutz vor Verschmutzung, während die Meßblende sicherstellen soll, daß für einen Drahtdurchmesser in verschiedenen Positionen im Meßfeld die gleiche Lichtabschattung erzeugt wird.

Die EP-A-0 565 090 beschreibt eine Vorrichtung zur Messung der Abmessungen eines Objektes mit Hilfe eines Laserscanners. Hierbei wird der Laserstrahl in einer zu messenden Richtung über das Objekt geführt, und aus der Dauer der Unterbrechung des Laserstrahls auf die Abmessung des Objektes in dieser Richtung geschlossen. Die Vorrichtung arbeitet insbesondere mit einer Laserstrahlführung mittels rotierender oder oszillierender Spiegel.

Die EP-B-0 312 056 beschreibt eine bestimmte Sensoranordnung zur Bestimmung der Lage eines Erodierdrahtes. Die Sensoranordnung ist dabei so ausgebildet, daß sie eine von der relativen Lagen der Laufdrahtelektrode umkehrbar eindeutig abhängige Lichtmenge absorbiert. Hierzu kann beispielsweise eine Blende mit einem dreieckförmigen Ausschnitt vorgesehen sein.

Die EP-A-0 322 470 beschreibt eine Vorrichtung zum Bestimmen der Masse und des Volumens eines Fadens mittels einer Durchmessermessung. Das Meßprinzip beruht ebenfalls auf einer Abschattungsmessung. In den Lichtstrahl ist eine Maske mit zwei Meßschlitzen eingebracht, durch die das Licht der einen Lichtquelle auf zwei getrennte Lichtdetektoren fallen kann. Der im Durchmesser zu vermessende Faden schattet nur einen Meßschlitz ab, so daß das durch den zweiten Meßschlitz fallende Licht als eine Referenzgröße für die Lichthelligkeit der Lichtquelle dient.

Die Erfindung zielt darauf ab, eine optische Meßvorrichtung sowie ein optisches Meßverfahren zu schaffen, mit der/dem die Meßauflösung verbessert wird.

Die Erfindung erreicht dieses Ziel durch die Gegenstände der Ansprüche 1 und 18. Weitere Ausfuhrungen der Erfindung sind in den jeweils abhängigen Ansprüchen beschrieben.

Nach der Erfindung wird bei einer gattungsgemäßen optischen Meßvorrichtung im Lichtstrahlengang zwischen der Lichtquelle und dem Meßgegenstand ein Lichtwellenleiter angeordnet. Bei einem gattungsgemäßen Verfahren wird der Lichtstrahl zwischen der Lichtquelle und dem Meßgegenstand mittels eines Lichtwellenleiters geführt.

Bevorzugt ist die erfindungsgemäße Einrichtung zum Linearisieren der lateralen Lichtintensitätsverteilung eine Lichtmaske mit wenigstens einer Maskenöffnung (Anspruch 2). Sie kann aber auch ein optisches Verlaufsfilter oder eine in der Lichtdurchlässigkeit veränderbare Maske (nach Art eines LCD-Displays) o.ä. sein. Grundsätzlich wird durch diese Einrichtung folgendes bewirkt. Der Lichtstrahl wird in seinem Querschnitt verschiedenen Meßsituationen derart angepaßte daß einerseits die Lichtintensitätsverteilung über den gesamten Querschnitt des Lichtstrahls möglichst homogen bleibt und andererseits Störeinflüsse verringert werden. Die optische Meßvorrichtung kann dabei bevorzugt zur Überwachung der Qualität und Geometrie von Drähten aller Art, Textilfasern, Kabeln, optischer Fiber- oder Glasfaserleitungen und ähnlicher drahtartiger Gegenstände oder Fäden, und zwar schon bei deren Herstellung, eingesetzt werden. Ggf kann die Herstellung bei einem Auftreten von Qualitätsabweichungen korrigiert bzw. die fehlerhafte Stelle, die später entfernt werden soll, gespeichert werden.

Besonders bevorzugt sind n Meßpaare in einer Ebene und/oder unter bestimmten Winkeln, insbesondere jeweils unter einem Winkel von 180°/n, zueinander angeordnet (Anspruch 3). Die optische Meßvorrichtung ermittelt damit beispielsweise Informationen über die Drahtform und eventuell die Drahtlage in mehr als einer Richtung. Somit läßt sich auch die Präzision der optischen Meßvorrichtung weiter verbessern. Vorteilhaft können drei Meßpaare in einem Winkel von 60° zueinander angeordnet und die drei Lichtquellen jeweils um 120° gegeneinander versetzt werden. Die Drahtgeometrie und -oberflächenregelmäßigkeit, wie auch die Auslenkung eines zu überwachenden Drahtes gegenüber einer Sollage läßt sich also aus zwei oder mehreren Richtungen überwachen. Die Erfindung eignet sich damit insbesondere für eine umfassende Überwachung der Lage und der Beschaffenheit eines Erodierdrahtes bei der Elektroerosion.

Bevorzugt sind zur Führung des Lichtstrahlenganges - von der Lichtquelle ausgehend bis zum Lichtdetektor - vor dem Lichtwellenleiter ein erstes Kopplungsglied und/oder nach dem Lichtwellenleiter eine erste Linse - nachfolgend Senderlinse genannt - und/oder die Lichtmaske und/oder wenigstens eine zweite Linse - nachfolgend Empfängerlinse genannt - und/oder wenigstens ein zweiter Lichtwellenleiter und/oder wenigstens ein zweites Kopplungsglied angeordnet (Anspruch 4). Damit wird der Lichtstrahl über Lichtwellenleiter zu/von einem Meßraum hin- und weggeführt, in welchem sich der drahtartige Gegenstand zum Zwecke einer Messung befindet. Durch diese bevorzugte Ausgestaltung sind keine elektrischen Elemente mehr in unmittelbarer Nähe des Meßraumes angeordnet, und die optische Meßvorrichtung wird insgesamt unempfindlicher gegen äußere Störeinflüsse, wie elektromagnetische Strahlung o.ä.

Bevorzugt ist die Maskenöffnung im wesentlichen rechteckförmig ausgebildet, wobei der Verlauf von wenigstens einer der beiden senkrecht zu der Bewegungsrichtung des durchführbaren Gegenstandes ausgerichteten Seitenkante der Maskenöffnung einer mathematischen Kurve folgt, welche die Lichtintensitätsverteilung aller lichtführenden Komponenten berücksichtigt (Anspruch 5). Mit dieser Maßnahme läßt sich der tatsächliche Meßbereich vergrößern und in der Linearität verbessern.

Bevorzugt ist der Verlauf der Seitenkante kreissegment-, ellipsensegment-, sinus- oder dreieckförmig (Anspruch 6). Bevorzugt sind aber auch andere Verläufe zur Linearisierung der lateralen Lichtintensitätsverteilung möglich.

Bevorzugt ist die Maskenöffnung während des Betriebes der Meßvorrichtung in ihrer geometrischen Form veränderbar (Anspruch 7). Somit kann die Meßvorrichtung beispielsweise an die Gegenstandsgröße der zu vermessenden Gegenstände oder verschiedene Lichtcharakteristiken des Lichtstrahls entweder manuell zu Beginn jeder Messung oder automatisch während einer Meßfolge angepaßt werden. Ebenso können Temperatureffekte kompensiert werden.

Bevorzugt ist der Verlauf der wenigstens einen Seitenkante mit Hilfe wenigstens eines Stellgliedes, insbesondere eines Bimetalls, eines Gedächtnismetalls oder eines piezoelektrischen Stellgliedes, einstellbar bzw. regelbar (Anspruch 8).

Bevorzugt ist die Maskenöffnung in ihrer Breite über wenigstens ein Stellglied einstellbar bzw. regelbar (Anspruch 9). Auch mit dieser Maßnahme lassen sich äußere Störeinflüsse durch Fremdpartikel im Lichtstrahlgang verringern, in dem die Maskenöffnung beispielsweise der Objektgröße angepaßt wird.

Bevorzugt ist die Lichtmaske erodiert oder lithographisch in Siliziumtechnik hergestellt (Anspruch 10). Mit diesen Herstellungsverfahren erhält man besonders genaue Konturen der Maskenöffnungen in der Lichtmaske. Die litographische Herstellung ist ferner noch kostengünstig und einfach durchzuführen. Die Lichtmaske ist bevorzugt aus einer Folie herstellbar, in welche die einzelnen Maskenöffnungen erodiert werden.

Bevorzugt sind die Linsen selbstfokusierend ausgebildet (Anspruch 11). Damit können Fremdlichteinflüsse weitestgehend eliminiert werden. Wird die optische Meßvorrichtung auch noch so stark eingekapselt, daß der Einfall von nahezu parallelen Licht auf die Linsen verhindert wird, so ist der Fremdlichteinfluß selbst starker Lichtquellen nahezu gleich Null. Bevorzugt ist die Senderlinse zur Erzeugung eines parallelen Lichtbündels und die Empfängerlinse zur Aufnahme nur von parallel einfallendem Licht ausgelegt (Anspruch 12).

Bevorzugt ist das erste und das wenigstens zweite Kopplungsglied in einem temperaturstabilen Kopplungsblock zusammengefaßt (Anspruch 13).

In einem bevorzugten Ausführungsbeispiel sind wenigstens zwei gegenläufig dreieckförmig ausgebildete Linsen hinter einer im wesentlichen rechteckförmigen Maskenöffnung der Lichtmaske angeordnet, welche über jeweils den weiteren Lichtwellenleiter und ein Kopplungsglied an jeweils einen Lichtdetektor angeschlossen sind (Anspruch 14). Mit dieser bevorzugten Ausführungsform läßt sich auch die Lage des Gegenstandes messen.

Bevorzugt sind die Lichtdetektoren an eine Auswerteeinrichtung angeschlossen, welche zur Bestimmung der Lage und/oder der Form des Gegenstandes in der Meßvorrichtung ausgelegt ist (Anspruch 15). Die Auswertungseinrichtung kann beispielsweise ein Softwareprogramm sein, welches aus den Lichtdetektor-Ausgangsmeßwerten die Form und/oder die Lage des drahtartigen Gegenstandes berechnet.

Bevorzugt weist die Lichtmaske eine zweite, insbesondere rechteckförmige Referenz-Maskenöffnung zur Messungsnormierung auf (Anspruch 16). Die optische Meßvorrichtung ist damit vorteilhaft gegen Lichtintensitätsschwankungen unempfindlich. Für eine Bestimmung des Drahtdurchmessers beispielsweise in einer Richtung (bzw. mit einem Meßpaar) muß lediglich die Intensität an der Öffnung der Maske (d.h. die Öffnung, vor welcher der Draht vorbeiläuft) durch die momentan auf die Referenzmessungs-Öffnung auftreffende Lichtmenge geteilt und mit einer vorgegebenen Konstanten, welche die Flächenverhältnisse der beiden Öffnungen berücksichtigt, multipliziert werden.

Bevorzugt ist die Lichtquelle ein monochromatischer Laser oder eine lichtemittierende Diode und/oder der Lichtdetektor eine Photodiode (Anspruch 17). Die Lichtquelle sendet somit nur monochromatisches Licht aus, womit Dispersionseffekte und damit einhergehende Lichtintensitätsveränderungen nicht mehr berücksichtigt werden müssen. Eine Leuchtdiode ist in der Stabilität und der Lebensdauer dabei nochmals besser als eine Laserdiode. Eine Photodiode hat eine nahezu unbegrenzte Auflösung, ist weitestgehend störunempfindlich und außerdem sehr schnell; die Signalauswertung in der optischen Meßvorrichtung wird damit nur noch durch die Schnelligkeit der Photodiode begrenzt, da keine mathematische Signalauswertung mehr vorgenommen werden muß (die Photodiode liefert bereits ein Summensignal der insgesamt auf ihre Sensor-Oberfläche auftreffenden Lichtmenge). Es lassen sich Signale mit einer Taktfrequenz von 50-100 kHz bei einer Auflösung von 2000 Punkten auswerten. Außerdem wird die gesamte Meßvorrichtung insgesamt schock- und schlagunempfindlich.

Bevorzugt wird eine bestimmte zu erwartende Form, insbesondere ein Defekt, des Gegenstandes durch Anpassen des Lichtstrahlausschnittes und/oder durch Übereinanderanordnen mehrerer Meßpaare berücksichtigt (Anspruch 19). Bei einem drahtartigen Gegenstand liegen beispielsweise fehlerhafte Drahtabschnitte meistens typischerweise etwa gleicher Länge vor. Paßt man die Höhe der Maskenöffnung (der Draht verlaufe entlang der Höhe der Maskenöffnung) an diese Länge an, so läßt sich die Länge des fehlerhaften Drahtabschnittes stets sinnvoll messen. In diesem Zusammenhang ist es besonders vorteilhaft, mehrere Meßpaare mit geringer Maskenöffnungs-Höhe übereinander (also in Drahtverlaufsrichtung) anzuordnen.

Weitere Vorteile der Erfindung ergeben sich aus der nachfolgenden Beschreibung bevorzugter Ausführungsbeispiele. In dieser Beschreibung wird auf die beigefügte schematische Zeichnung Bezug genommen. In der Zeichnung zeigen:
- Fig. 1a und b: eine Seitenansicht eines grundsätzlichen Aufbaus einer optischen Meßvorrichtung (Fig. la) und eine Aufsicht auf eine darin enthaltenen Maske (Fig. 1b);
- Fig. 2a und b: eine Seitenansicht eines grundsätzlichen Aufbaus einer optischen Meßvorrichtung mit einer Referenzmeßvorrichtung (Fig. 2a) und eine Aufsicht auf eine darin enthaltene Maske (Fig. 2b);
- Fig. 3a: eine Aufsicht auf eine Lichtmaske mit einer rechteckförmigen Maskenöffnung;
- Fig. 3b: in einem Diagramm eine geglättete laterale Lichtintensitätsverteilung in der optischen Meßvorrichtung;
- Fig. 4a: eine Aufsicht auf eine Lichtmaske mit einer weiterentwickelten Maskenöffnung;
- Fig. 4b: - analog zur Fig. 3b - in einem Diagramm eine laterale Lichtintensitätsverteilung eines Lichtstrahles durch die Optik einer optischen Meßvorrichtung mit der in Fig. 4a gezeigten Maskenöffnung;
- Fig. 5: in einem Diagramm den Meßsignalverlauf für verschiedene Drahtdurchmesser;
- Fig. 6: in einem Diagramm den Meßsignalverlauf für einen Draht in verschiedenen Abständen von der Oberfläche der Lichtmaske;
- Fig. 7: einen vergrößerten Ausschnitt aus einem Diagramm für den Meßsignalverlauf bei einem bestimmten Drahtdurchmesser;
- Fig. 8: eine Aufsicht auf die Lichtmaske eines Meßpaares in einer optischen Meßvorrichtung zur Lagebestimmung eines Drahtes;
- Fig. 9: zum Meßpaar der Fig. la rechtwinklig angeordnetes weiteres Meßpaar.

Nachfolgend wird eine Terminologie verwendet, die der leichteren Lesbarkeit der Beschreibung dient, nicht aber einschränkend zu verstehen ist. Beispielsweise beziehen sich die Ausdrücke "unten" und "oben" auf eine optische Meßvorrichtung, die so im Raum angeordnet ist, daß beispielsweise ein drahtartiger Gegenstand senkrecht zum Boden und ebenfalls senkrecht durch die Meßvorrichtung führt.

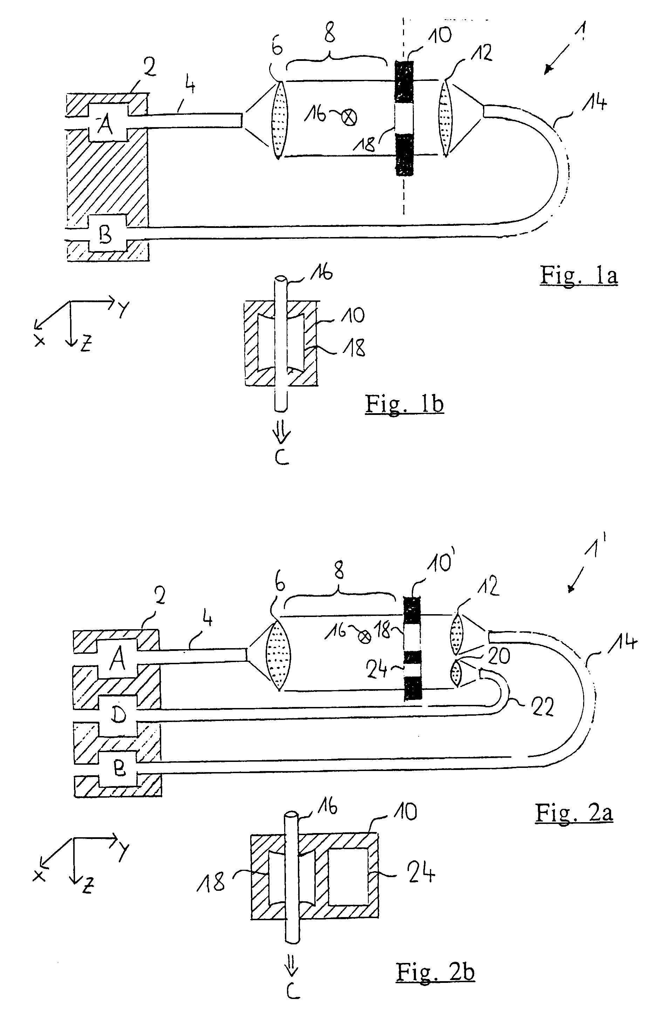

Fig. 1a zeigt eine Seitenansicht einer optischen Meßvorrichtung mit einem Meßpaar 1. Das Meßpaar 1 umfaßt einen Kopplungsblock 2, eine sich im Kopplungsblock 2 befindliche Lichtquelle A, einen ersten Lichtleiter 4, eine erste Linse - nachfolgend Senderlinse 6 genannt -, einen Meßraum 8, eine Maske 10, eine zweite Linse - nachfolgend Empfängerlinse 12 genannt -, einen zweiten Lichtleiter 14 und einen sich ebenfalls im Kopplungsblock 2 befindlichen Lichtdetektor B. Der erste Lichtleiter 4 führt vom Kopplungsblock 2 zur Senderlinse 6, der zweite Lichtleiter 14 von der Empfängerlinse 12 zurück zum Kopplungsblock 2.

Damit ergibt sich insgesamt folgender Lichtstrahlgang durch das Meßpaar 1 der optischen Meßvorrichtung: Ein von der Lichtquelle A ausgesandter Lichtstrahl im Kopplungsblock 2 wird in ein Ende des Lichtleiters 4 eingeleitet. Er verläßt den Lichtleiter 4 an dem anderen Ende als divergentes Lichtstrahlbündel und trifft auf die Senderlinse 6. Hinter der Senderlinse 6 ist er in einen parallelen Lichtstrahl kollimiert und läuft so durch den Meßraum 8. Im Meßraum 8 trifft der dort parallele Lichtstrahl auf die Lichtmaske 10, wird von dieser bereichsweise abgeschattet, wobei der nicht abgeschattete Anteil dieses Lichtstrahls durch eine Maskenöffnung 18 der Lichtmaske 10 gelangt und anschließend auf die Empfängerlinse 12 trifft. Von der Empfängerlinse 12 wird der Lichtstrahl auf ein Ende des Lichtleiters 14 fokussiert. Von dem einen Ende des Lichtleiters 14 wird der Lichtstrahl an sein anderes Ende zurück zum Kopplungsblock 2 geführt und gelangt an dem sich im Kopplungsblock 2 befindlichen Lichtdetektor B.

Ein Draht 16 verläuft - senkrecht zur Zeichenebene der Fig. 1 - durch den Meßraum 8. Der Draht 16 schattet den von der Senderlinse 6 kommenden, parallelen Lichtstrahl in Lichtstrahlrichtung ab und wirft somit seinen Schatten auf die Oberfläche der Lichtmaske 10. Aufgrund der Parallelität des Lichtstrahls wird der Schatten des Drahtes 16 unabhängig vom Abstand des Drahtes 16 von der Oberfläche der Lichtmaske 10 im Maßstab 1:1 auf diese Oberfläche abgebildet.

Die Sender- 6 und die Empfängerlinse 12 sind selbstfokussierend ausgebildet, d.h. die Apertur der einzelnen Linsen 6, 12 liegt ungefähr im Bereich von +/- 2.5°. Damit fokussieren die Linsen 6, 12 tatsächlich nur paralleles Licht in ihren Brennpunkt. Somit kann einerseits Licht eines - unter einem Winkel größer als 2.5° einfallenden - Lichtstrahls z.B. einer starken Halogenlampe die Messung nicht mehr negativ beeinflussen, da dieses Licht nicht von der Empfängerlinse 12 gesammelt wird und damit auch nicht bis zum Detektor gelangt. Der Meßraum 8 ist dabei so ausgebildet, daß kein Licht unter einem Winkel kleiner als 2.5° einfallen und auf die Lichtmaske 10 treffen kann. Andererseits ist sichergestellt, daß der von der Senderlinse 6 stammende, durch den Meßraum 8 verlaufende Lichtstrahl tatsächlich parallel ist. Eventuelle Vibrationen des Drahtes 16 in y-Richtung beeinflussen die Messung nicht.

Fig. 1b zeigt eine Aufsicht der in Fig. 1a dargestellten Lichtmaske 10 und des davor verlaufenden Drahtes 16. Wird der Draht 16 in Richtung des Pfeiles C - nachfolgend Vorschubrichtung genannt - vorgespult (es wird beispielsweise ein Erodierdraht von einer Vorratsspule abgespult), so können beispielsweise Änderungen des Drahtdurchmessers beim Vorspulen erfaßt werden. Gelangt ein Drahtabschnitt mit einem fehlerhaften Drahtdurchmesser, d.h. einem größeren bzw. kleineren Durchmesser als der durchschnittliche Drahtdurchmesser, vor die Maskenöffnung 18 der Lichtmaske 10, so dunkelt der Schatten dieses Drahtabschnittes flächenmäßig auch einen größeren Bereich der Maskenöffnung 18 ab. Insgesamt gelangt somit nur noch eine kleinere Lichtmenge an den Lichtdetektor B.

Eine an den Lichtdetektor B angeschlossene Auswerteeinrichtung kann die empfangene Lichtmenge beispielsweise mit dem Drahtdurchmesser korrelieren und somit die Länge dieses Drahtabschnittes und den fehlerhaften Drahtdurchmesser während des Vorspulens des Drahtes 16 berechnen.

In einem ersten Beispiel sei die Länge dieses Drahtabschnittes - in Vorschubrichtung gesehen - kleiner als die Höhe der Maskenöffnung 18 - in z-Richtung (und damit ebenfalls in Vorschubrichtung) gesehen. Dann fällt der Schatten dieses Drahtabschnittes eine gewisse Zeit lang - beginnend, wenn er mit seinem hinteren Ende von oben in die Maskenöffnung 18 gelangt, und endend, wenn er mit seinem vorderen Anfang nach unten aus der Maskenöffnung 18 gelangt - in seiner gesamten Größe auf die Maskenöffnung 18. Aus der differentiellen Lichtmengenänderung, d.h. der Änderung der Lichtmenge pro Zeit - kann dann auf den fehlerhaften Drahtdurchmesser geschlossen werden. Mit dem so erhaltenen Wert für den Drahtdurchmesser kann zusätzlich aus dem Wert der totalen Lichtmengenänderung, d.h. der Differenz aus der Lichtmenge, bevor dieser fehlerhafte Drahtabschnitt die Maskenöffnung 18 abdunkelt, und der Lichtmenge, wenn dieser Drahtabschnitt die Maskenöffnung 18 in seiner gesamten Größe abdunkelt - auf die Länge des fehlerhaften Drahtabschnittes geschlossen werden.

In einem zweiten Beispiel sei die Länge des fehlerhaften Drahtabschnitts länger als die Höhe der Maskenöffnung 18. Dieser fehlerhafte Drahtabschnitt dunkelt beim Vorspulen des Drahtes 16 die Maskenöffnung 18 eine bestimmte Zeit lang - die Abdunklungszeit - über ihre gesamte Höhe ab. Der Drahtdurchmesser wird auch in diesem zweiten Beispiel analog zum ersten Beispiel ermittelt. Bei genauer Kenntnis der Vorschubgeschwindigkeit des Drahtes 16 und Messung der Abdunklungszeit ist es zudem möglich, auch die Länge des fehlerhaften Drahtabschnittes zu bestimmen. Es ist aber ebenso möglich, die Höhe der Maskenöffnung 18 von vornherein bei Kenntnis einer durchschnittlichen typischen Länge dieser fehlerhaften Drahtabschnitte an diese jeweilige typische Länge anzupassen und gemäß dem ersten Beipiel auszuwerten. Ferner können auch wenigstens zwei Meßpaare 1 so in Z-Richtung übereinander angeordnet sein, daß ihr Abstand voneinander im wesentlichen einer typischen Länge entspricht.

Die Höhe der Maskenöffnung 18 kann über Stellglieder, beispielsweise Piezo-Stellelemente, Bimetallfedern oder Gedächtnismetalle verändert werden und somit an eine erwartete, ungefähre Länge fehlerhafter Drahtabschnitte manuell oder automatisch, optimal angepaßt werden. Eine zu große Maskenöffnung 18 ist nämlich anfälliger gegen eventuelle Fremdpartikel - wie Staubpartikel o.ä. - im Lichtstrahlengang des Meßraumes 8 als eine vergleichsweise kleinere Maskenöffnung 18. Es kann ebenso die Breite der Maskenöffnung 18 an einen bestimmten, erwarteten Drahtdurchmesser optimal angepaßt werden, da mit diese Maßnahme die og. Störeinflüsse in gleicher Weise verringert werden. Es sei bemerkt, daß über die Höhe der Maskenöffnung 18 nicht die Auflösung des Detektors verändert wird. Diese bleibt selbstverständlich konstant. Da die Auflösung der verwendeten Detektoren in der Regel sehr groß ist, führt eine Verringerung der Höhe der Maskenöffnung 18 zu keinem merklichen Verlust der gesamten Meßauflösung der optischen Meßvorrichtung. Ist die an den Lichtdetektor B angeschlossene elektronische Signal-Auswerteeinrichtung nämlich in der Lage, ebenso kleinere Signale mit derselben Genauigkeit, d.h ohne verschlechterten Signal-Rausch-Abstand, weiterzuverarbeiten, so ändert sich an der Gesamtauflösung nichts. Lediglich der bereits erwähnte Einfluß von Fremdpartikeln wird durch Verringern des lateralen Lichtstrahlausschnittes vermindert. Es wird nämlich die Wahrscheinlichkeit, Fremdpartikel in diesem Lichtstrahlausschnitt, bzw. in dem über die Länge (in y-Richtung) des Meßraum 8 verlaufenden Lichtstrahlkonus anzutreffen vermindert.

Fig. 2a zeigt ein weiteres Meßpaar 1' einer optischen Meß-vorrichtung, die im Prinzip ähnlich der in den Fig. la und b gezeigten Meßvorrichtung aufgebaut ist. Die beiden Meßvorrichtungen unterscheiden sich lediglich durch eine zusätzliche Vorrichtung zur Referenzlichtmessung. Hierzu ist in dem Meßpaar 1' eine weitere Linse 20, ein weiterer Lichtleiter 22, ein sich im Kopplungsblock 2 befindlicher Referenz-Lichtdetektor D und eine weitere Referenz-Maskenöffnung 24 in der Lichtmaske 10 angeordnet. Die weitere Linse 20 bündelt das von der Referenz-Maskenöffnung 24 durchgelassene Licht des parallelen Lichtstrahls vom Meßraum 8 auf den weiteren Lichtleiter 22. Von dort wird der Lichtstrahl an Referenz-Lichtdetektor D im Kopplungsblock 2 geleitet. Mit diesem Referenz-Lichtdetektor D ist es möglich, Lichtintensitätsschwankungen im gesamten Lichtkreis zu kompensieren, welche die Meßergebnisse verfälschen können.

Fig. 2b zeigt in einer Aufsicht die beiden Maskenöffnungen 18 und 24 der Lichtmaske 10. Der Draht 16 verläuft nur vor der Maskenöffnung 18, welche z.B. die Drahtdurchmesserschwankungen erfaßt. Die Referenz-Maskenöffnung 24 dient dazu, jeweils das Licht der Lichtquelle A ohne den Schatten des Drahtes 16 an den Referenz-Lichtdetektor D zu leiten. Dieser erfaßt damit ein Referenzsignal, welches ein Maß für die Intensität der Lichtquelle A ist. Da sowohl die Maskenöffnung 18 als auch die Referenz-Maskenöffnung 24 von dem parallelen Lichtstrahl des Meßraumes 8 ausgeleuchtet werden, trifft auf beide Öffnungen 18, 24 Licht weitestgehend gleicher Intensität. Der Durchmesser des Drahtes 16 läßt sich daher unabhängig von der Lichtintensität der Lichtquelle A - über eine Normierung des Meßsignals des Lichtdetektors B auf das Referenzmeßsignal des Referenz-Lichtdetektors D - bestimmen.

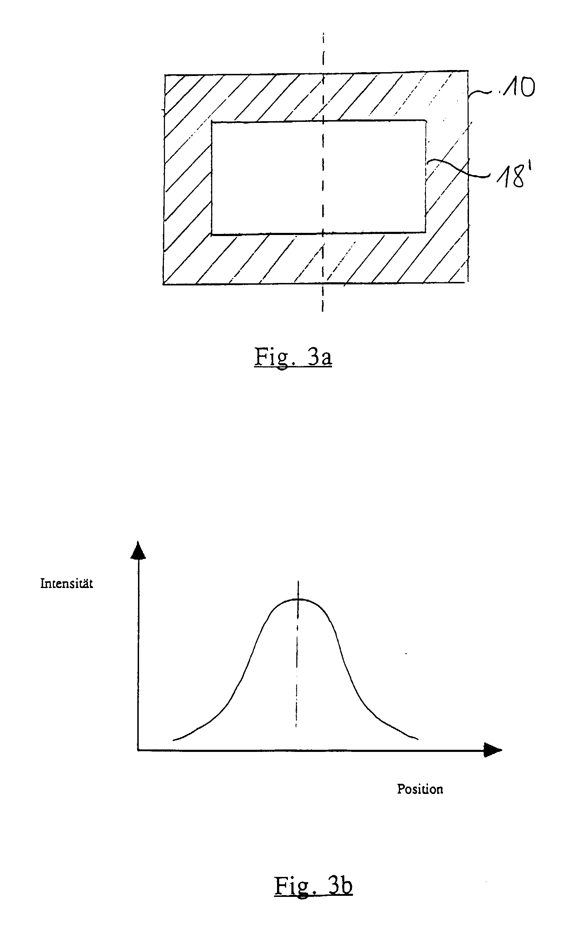

Fig. 3a zeigt eine Aufsicht auf eine Lichtmaske 10 mit einer rechteckförmigen Maskenöffnung 18'. Normalerweise weist der Lichstrahl einer Lichtquelle - im Strahlquerschnitt gesehen - bereits ein Intensitätsmuster auf, das beispielsweise eine Abbildung der inneren Struktur der Lichtquelle ist. Selbst in Photodioden kommt es durch Dikkeschwankungen der verschiedenen, Photonen emittierenden Halbleiter-Substratschichten oder Verunreinigungen im Halbleitersubstrat zu diesem Intensitätsmuster. Auch Laser bzw. Laserdioden zeigen diese Intensitätsschwankungen, welche beispielsweise von den verschiedenen Moden herrühren, welche durch die inneren Abmessungen der lichtverstärkenden Kavitäten verursacht werden. Da diese Intensitätsmuster eine hochauflösende Messung beispielsweise von Drahtdurchmessern erschweren oder sogar verhindern, ist man interressiert, das Intensitätsprofil zu glätten.

Fig. 3b zeigt in einem Diagramm eine geglättete laterale Lichtintensitätverteilung der optischen Meßvorrichtung. Dazu ist auf der X-Achse die Position der Lichtintensität in x-Richtung und auf der Y-Achse die zugehörige Lichtintensität angegeben. Die so erhaltene Lichtintensitätsverteilung gibt ein Lichtprofil wieder, welches von der gesamten Optik der optischen Meßvorrichtung bedingt wird. Maßgeblich prägen die Lichtleiter 4,14 und 22 dieses Lichtprofil, aber auch die Linsen 6, 12 und 20 stellen durch Abbildungsfehler in ihren Randbereichen o.ä. ein solches Lichtprofil auf. Deutlich erkennbar ist eine Art Gauß'sche Lichtintensitätsverteilung. Im Zentrum der gesamten Optik ist die Lichtintensität sehr groß und fällt in Richtung ihrer Ränder exponentiell ab. Der tatsächliche Meßbereich ist damit nur dort gegeben, wo sich die Intensitätsverteilung nur unmerklich mit der Position verändert. Dann nämlich besteht ein unmittelbarer (linearer) Zusammenhang zwischen einer Lichtmengenänderung und einer Drahtdurchmesseränderung. Dieser tatsächliche Meßbereich ist aber stark um das Zentrum der Gauß'schen Intensitätsverteilung konzentriert und somit lokal stark eingeschränkt.

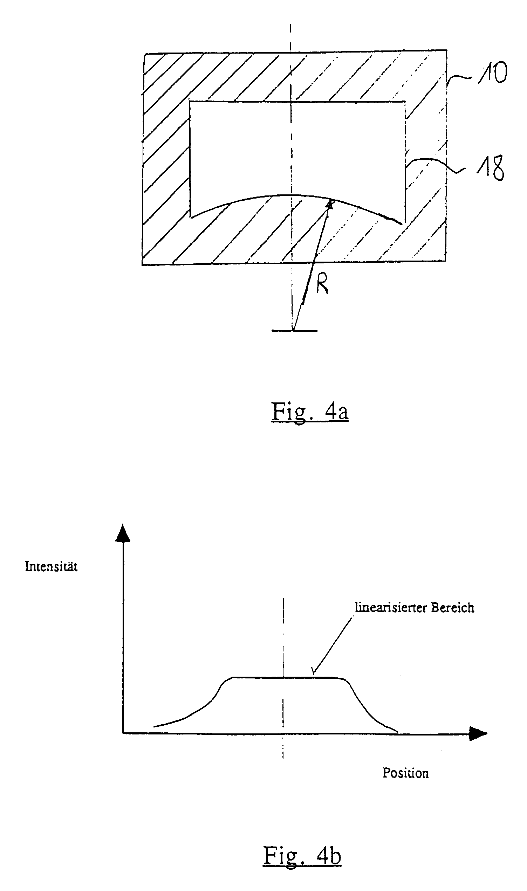

Fig. 4a zeigt eine Aufsicht auf eine Lichtmaske 10 mit einer weiterentwickelten Maskenöffnung 18. Die Maskenöffnung 18 ist prinzipiell wieder rechteckförmig ausgebildet, wobei jedoch die untere Kante (und/oder obere Kante - nicht gezeigt) der Maskenöffnung 18 längs einer gekrümmten Kurve verläuft. Diese Kurve kann beispielsweise - wie in der Fig. 4a gezeigt - ein Kreisbogensegment eines Kreises vom Durchmesser R sein. Mit dieser Maßnahme wird die Lichtintensitätsverteilung der gesamten Optik stärker linearisiert.

Fig. 4b zeigt - analog zur Fig. 3b - die Lichtintensitätsverteilung eines Lichtstrahles durch die Optik einer optischen Meßvorrichtung mit der in Fig. 4a gezeigten Maskenöffnung 18. Deutlich erkennbar ist der - gegenüber der in Fig. 3b gezeigten Lichtintensitätsverteilung - stark vergrößerte linearisierte Bereich. Prinzipiell wird die Linearisierung dadurch erreicht, daß im Bereich großer Lichtintensität künstlich - über die Ausformung der Maskenöffnung 18 - eine größere Lichtmenge absorbiert wird als im Bereich kleinerer Lichtintensität. Wenn die Ausformung den Positionsverlauf (hier in x-Richtung) der ursprünglichen Lichtintensitätsverteilung geeignet berücksichtigt (wenn sie z.B. dem ursprünglichen Intensitätsverlauf folgt), so kann die so erhaltene Intensitätsverteilung über einen großen Bereich linearisiert werden. Somit wird auch der eigentliche Meßbereich stark vergrößert.

Der Verlauf der unteren (und/oder oberen) Kante der Maskenöffnung 18 kann auch über ein Stellglied geeignet eingestellt werden. Somit kann die Intensitätsverteilung mit einem ortsauflösenden Lichtdetektor B einmalig oder wiederholt - während des normalen Betriebes der optischen Meßvorrichtung - vermessen, die so erhaltenen Daten an das Stellglied geliefert und der Verlauf entsprechend angepaßt werden.

Das Stellglied kann wiederum ein Piezo-Stellelement, eine Bimetallfeder oder eine Art Gedächtnismetall sein. Die untere (obere) Kante kann dabei als eine Art Membran ausgebildet sein. Das Stellglied drückt dabei z.B. punktuell gegen das Zentrum dieser Membran, welche sich nach oben "ausbeult" und somit bereits geeignete geometrische Form aufweist.

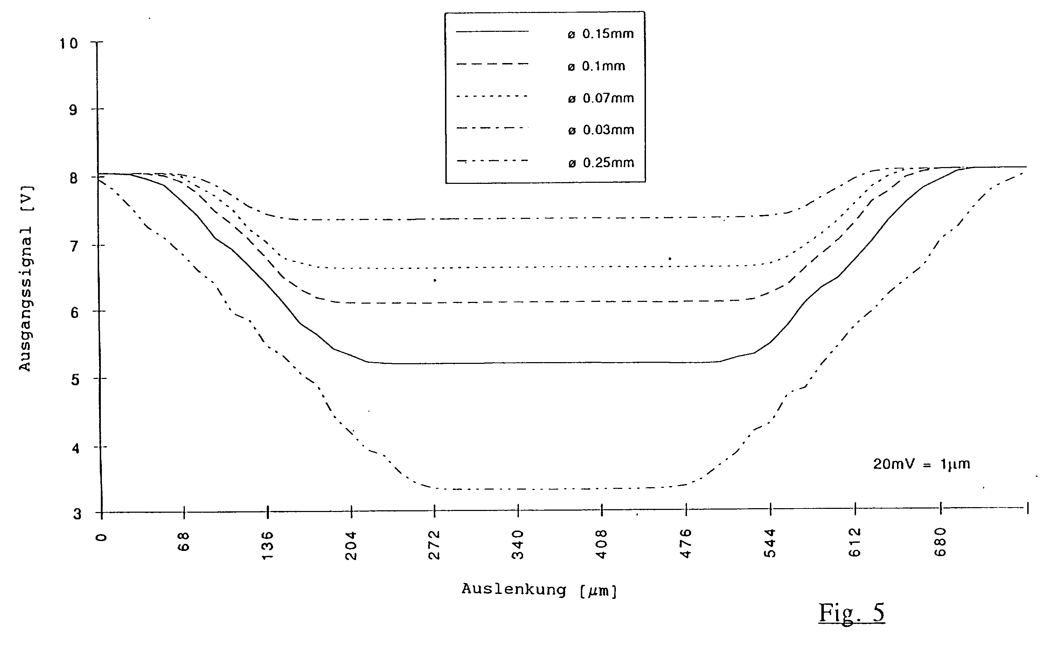

Fig. 5 zeigt im Rahmen eines Diagramms den Meßsignalverlauf für verschiedene, unterschiedlich gestrichelt dargestellte Drahtdurchmesser. Auf der X-Achse ist die Auslenkung des jeweiligen Drahtes 16 in x-Richtung, auf der Y-Achse das erhaltene Meßsignal als Ausgangsspannung dargestellt. Man erkennt deutlich, daß für große Durchmesser das Ausgangssignal am niedrigsten ist, da eine große Fläche des Sensormeßfeldes des Lichtdetektors B abgedunkelt ist. Der linearisierte Meßbereich erstreckt sich für den größten dargestellten Drahtdurchmesser von ungefähr 272 - 476 µm. Mit sinkendem Drahtdurchmesser steigt das Ausgangssignal und der lineare Meßbereich wird größer. Der Grund für die Vergrößerung des linearen Meßbereiches ist, daß der Draht 16 weiter an den Rand seines Meßbereiches ausgelenkt werden kann, bis er anfängt, den linearisierten Meßbereich zu verlassen. Eine Meßsignaländerung in Höhe von 20 mV entspricht in diesem Beispiel einer Drahtdurchmesseränderung von 1 µm.

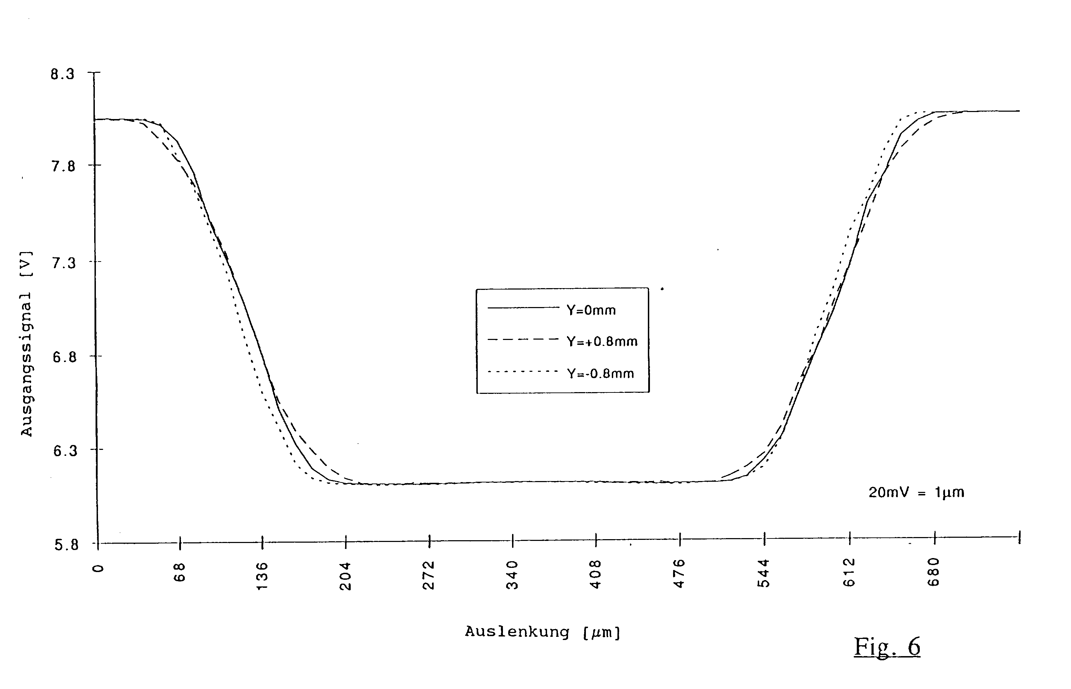

Fig. 6 zeigt in einem Diagramm den Meßsignalverlauf für einen Draht 16 in verschiedenen Abständen von der Oberfläche der Lichtmaske 10. Wiederum sind dieselben Größen an den beiden Achsen wie in Fig. 5 aufgetragen. Anhand dieses Beispiels ist deutlich erkennbar, daß der Abstand des Drahtes 16 von der Oberfläche der Lichtmaske 10 im linearisierten Meßbereich keine Rolle spielt.

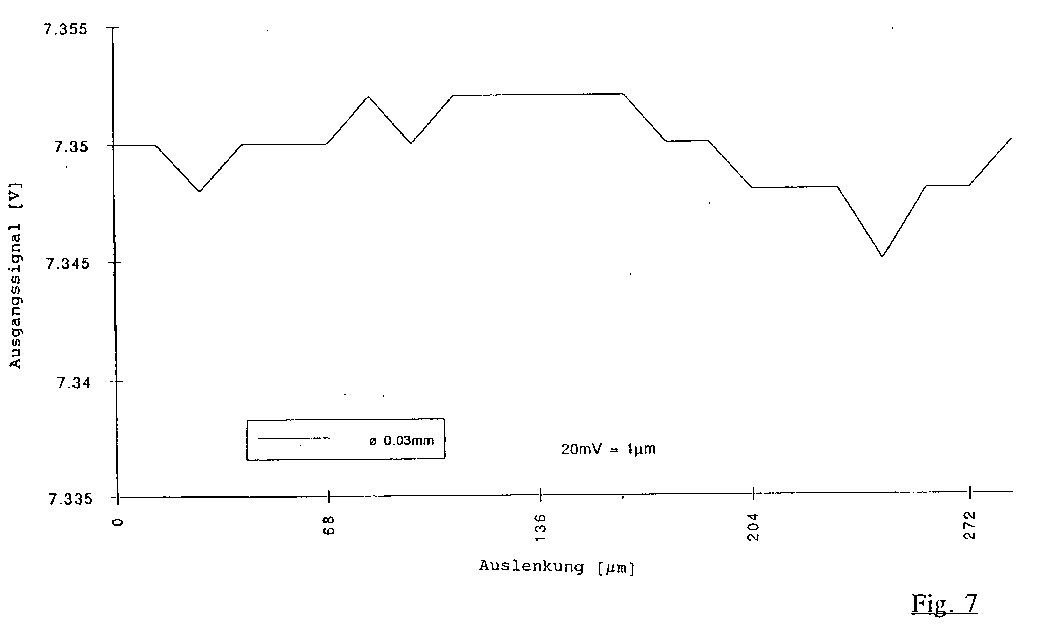

Fig. 7 zeigt einen vergrößerten Ausschnitt aus einem Diagramm für den Meßsignalverlauf eines Drahtes 16. Im linearisierten Meßbereich sind die Änderungen des Ausgangssignals bei Auslenkungen des Drahtes 16 in x-Richtung so gering, daß die Auflösung bei ungefähr einem Mikrometer liegt. Das Ausgangssignal ändert sich mit der Auslenkung des Drahtes nämlich nur um +/- 5 mV, was einer Drahtdurchmesseränderung von 0.5 µm entspricht.

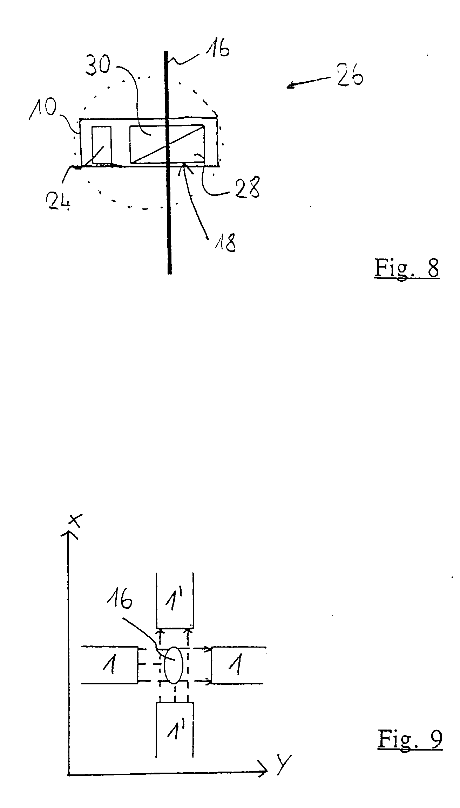

Fig. 8 zeigt eine Aufsicht auf die Lichtmaske 10 eines Meßpaares 26 in einer optischen Meßvorrichtung zur Lagebestimmung eines Drahtes 16. Dazu weist die Lichtmaske 10 eine rechteckförmige Maskenöffnung 18 auf, hinter der zwei im wesentlichen dreieckig geschliffene, gegenläufig aneinanderliegende Empfängerlinsen 28 und 30 angeordnet sind, von denen jeweils ein Lichtleiter (nicht dargestellt) wegführt. Die Lichtleiter leiten das einfallende Licht zwei verschiedenen nicht gezeigten Lichtdetektoren zu, welche ein der empfangenen Lichtmenge entsprechendes elektrisches Signal einer (ebenfalls nicht dargestellten) Auswerteeinrichtung zuführen (z.B. eine Softwareroutine eines Steuerungsrechners).

Die beiden Lichtdetektoren detektieren in ihrer jeweiligen Richtung die einfallende Lichtmenge gesondert, so daß die Differenz zwischen den zwei gemessenen Lichtmengen linear proportional zur Position des Drahtes in den Grenzen der Maskenöffnung 18 ist. Die Summe der beiden Lichtmengenmessungen ist bei einem gegebenen Drahtdurchmesser allerdings wieder unabhängig von der Position des Drahtes. Im Prinzip läßt sich damit aus dieser Summe wiederum der Drahtdurchmesser berechnen. Eine detailierte Beschreibung des apparativen Aufbaus eines derartigen Meßpaares 26 und eine Beschreibung der Messung der Draht lage mit einem derartigen Meßpaar findet sich in der EP 0 312 056 B1.

Zusätzlich ist in der in Fig. 8 gezeigten Lichtmaske 10 noch die Referenz-Maskenöffnung 24 mitaufgeführt. Der gestrichelt dargestellte Kreis stellt die äußere Umrandung des Meßpaares 26 der optischen Meßvorrichtung dar.

Das aus den beiden Lichtdetektorsignalen gebildete Summensignal zur Formbestimmung oder Differenzsignal zur Lagebestimmung kann auch in diesem Ausführungsbeispiel optimiert werden, imdem wieder die Lichtintensitätsverteilung auf den beiden Lichtdetektoren über den Kantenverlauf der Maskenöffnung 18 linearisiert wird.

Fig. 9 zeigt ergänzend zur Fig. la ein rechtwinklig zum ersten Meßpaar 1 angeordnetes weiteres Meßpaar 1'. Aus einem Vergleich der Messungen der Lichtmengen der Lichtdetektorsignale in X- und in Y-Richtung - also der Meßpaare 1 bzw. 1' - ergibt sich beispielsweise, daß der Draht 16 keine runde Form hat. Wie aus der Fig. 9 ersichtlich, fällt auf den Lichtdetektor des Meßpaares 1' aufgrund der ovalen Form des Drahtes 16 mehr Licht als auf den Lichtdetektor des Meßpaares 1. Unregelmäßigkeiten des Drahtdurchmessers lassen sich somit auch durch einen einfachen Vergleich der Meßwerte in den verschiedenen Richtungen ermitteln.

## Patentansprüche

1. Optische Meßvorrichtung zur Bestimmung der Form und/oder Lage eines in die Meßvorrichtung eingeführten bzw. durchführbaren Gegenstandes, insbesondere eines vorspulbaren drahtartigen Gegenstandes (16) wie z.B. ein Erodierdraht oder ein faseroptischer Leiter, mit:
- einem Meßpaar (1,1',26), welches eine Lichtquelle (A) sowie wenigstens einen Lichtdetektor (B, D) zum Ausbilden eines Lichtstrahlenganges aufweist; und
- einer im Lichtstrahlengang angeordneten Einrichtung zum Linearisieren der lateralen Lichtintensitätsverteilung des Lichtstrahls,
dadurch gekennzeichnet, daß
- im Lichtstrahlengang zwischen Lichtquelle (A) und Gegenstand (16) ein Lichtwellenleiter (4) angeordnet ist.

2. Optische Meßvorrichtung nach Anspruch 1, dadurch gekennzeichnet, daß die Einrichtung zum linearisieren der lateralen Lichtintensitätsverteilung eine Lichtmaske (10,10') mit wenigstens einer Maskenöffnung (18,18') ist.

3. Optische Meßvorrichtung nach Anspruch 1 oder 2, dadurch gekennzeichnet, daß n Meßpaare (1,1',26) in einer Ebene und/oder unter bestimmten Winkeln, insbesondere jeweils unter einem Winkel von 180°/n, zueinander angeordnet sind.

4. Optische Meßvorrichtung nach Anspruch 2 oder 3, dadurch gekennzeichnet, daß zur Führung des Lichtstrahlenganges - von der Lichtquelle (A) ausgehend bis zum Lichtdetektor (B,D) - vor dem Lichtwellenleiter ein erstes Kopplungsglied und/oder nach der Lichtwellenleiter (4) eine erste Linse - nachfolgend Senderlinse (6) genannt - und/oder eine Lichtmaske (10,10') und/oder wenigstens eine zweite Linse - nachfolgend Empfängerlinse (12) genannt - und/oder wenigstens ein weiterer Lichtwellenleiter (14) und/oder wenigstens ein weiterer Lichtwellenleiter (14) und/oder wenigstens ein zweites Kopplungsglied angeordnet sind.

5. Optische Meßvorrichtung nach dem Anspruch 2 oder einem der Ansprüche 3 und 4, in Abhängigkeit vom Anspruch 2 dadurch gekennzeichnet, daß die Maskenöffnung (18,18') im wesentlichen rechteckförmig ausgebildet ist, wobei der Verlauf von wenigstens einer der beiden senkrecht zu der Bewegungsrichtung des durchführbaren Gegenstandes (16) ausgerichteten Seitenkante der Maskenöffnung (18,18') einer mathematischen Kurve folgt, welche die Lichtintensitätsverteilung aller lichtführenden Komponenten (2,4,6,10,10',12,14,20,22,28,30) berücksichtigt.

6. Optische Meßvorrichtung nach Anspruch 5, dadurch gekennzeichnet, daß der Verlauf der Seitenkante kreissegment-, ellipsensegment-, sinus- oder dreieckförmig ist.

7. Optische Meßvorrichtung nach Anspruch 2 oder einem der Ansprüche 3 bis 6 in Abhängigkeit vom Anspruch 2, dadurch gekennzeichnet, daß die Maskenöffnung (18,18') während des Betriebes der Meßvorrichtung in ihrer geometrischen Form veränderbar ist.

8. Optische Meßvorrichtung nach Anspruch 7, dadurch gekennzeichnet, daß der Verlauf der wenigstens einen Seitenkante mit Hilfe wenigstens eines Stellgliedes, insbesondere eines Bimetalls, eines Gedächtnismetalls oder eines piezoelektrischen Stellgliedes, einstellbar bzw. regelbar ist.

9. Optische Meßvorrichtung nach Anspruch 7 oder 8, dadurch gekennzeichnet, daß die Maskenöffnung (18,18') in ihrer Breite über wenigstens ein Stellglied einstellbar bzw. regelbar ist.

10. Optische Meßvorrichtung nach Anspruch 2 oder einem der Ansprüche 3 bis 9 in Abhängigkeit vom Anspruch 2 , dadurch gekennzeichnet, daß die Lichtmaske (10,10') erodiert oder lithographisch in Siliziumtechnik hergestellt ist.

11. Optische Meßvorrichtung nach Anspruch 4 oder einem der Ansprüche 5 bis 10 in Abhängigkeit vom Anspruch 4 , dadurch gekennzeichnet, daß die Linsen (6,12,28, 30) selbstfokusierend ausgebildet sind.

12. Optische Meßvorrichtung nach Anspruch 4 oder einem der Ansprüche 5 bis 11 in Abhängigkeit vom Anspruch 4 , dadurch gekennzeichnet, daß die Senderlinse (6) zur Erzeugung eines parallelen Lichtbündels und die Empfängerlinse (12,28,30) zur Aufnahme nur von parallel einfallendem Licht ausgelegt ist.

13. Optische Meßvorrichtung nach Anspruch 4 oder einem der Ansprüche 5 bis 12 in Abhängigkeit vom Anspruch 4 , dadurch gekennzeichnet, daß das erste und das wenigstens zweite Kopplungsglied in einem temperaturstabilen Kopplungsblock (2) zusammengefaßt sind.

14. Optische Meßvorrichtung nach Anspruch 4 oder einem der Ansprüche 5 bis 13 in Abhängigkeit vom Anspruch 4 , dadurch gekennzeichnet, daß wenigstens zwei gegenläufig dreieckförmig ausgebildete Linsen (28,30) hinter einer im wesentlichen rechteckförmigen Maskenöffnung (18) der Lichtmaske (10,10') angeordnet sind, welche über jeweils den weiteren Lichtwellenleiter und ein Kopplungsglied an jeweils einen Lichtdetektor (B,D) angeschlossen sind.

15. Optische Meßvorrichtung nach einem der vorstehenden Ansprüche, dadurch gekennzeichnet, daß die Lichtdetektoren (B,D) an eine Auswerteeinrichtung angeschlossen sind, welche zur Bestimmung der Lage und/oder der Form des Gegenstandes (16) in der Meßvorrichtung ausgelegt ist.

16. Optische Meßvorrichtung nach Anspruch 2 oder einem der Ansprüche 3 bis 15 in Abhängigkeit vom Anspruch 2, dadurch gekennzeichnet, daß die Lichtmaske (10, 10') eine zweite, insbesondere rechteckförmige, Referenz-Maskenöffnung (24) zur Messungsnormierung aufweist.

17. Optische Meßvorrichtung nach einem der vorstehenden Ansprüche, dadurch gekennzeichnet, daß die Lichtquelle (A) ein monochromatischer Laser oder eine lichtemittierende Diode und/oder der Lichtdetektor (B,D) eine Photodiode ist.

18. Verfahren zur Bestimmung der Form und/oder Lage eines Gegenstandes (16), insbesondere zur Bestimmung der Drahtform bzw. -lage eines Erodierdrahtes, bei welchem:
- die Form/Lage des Gegenstandes (16) über seine Abschattung im Lichtstrahlengang zwischen wenigstens einem aus einer Lichtquelle (A) und einem Lichtdetektor (B, D) bestehenden Meßpaar (1, 1', 26) ermittelt wird; und
- die laterale Lichtintensitätsverteilung des Lichtstrahles im Lichtstrahlengang linearisiert wird,
dadurch gekennzeichnet, daß
- der Lichtstrahl zwischen Lichtquelle (A) und Gegenstand (16) mittels eines Lichtwellenleiters (4) geführt wird.

19. Verfahren nach Anspruch 18, dadurch gekennzeichnet, daß eine bestimmte zu erwartende Form, insbesondere ein Defekt, des Gegenstandes (16) durch Anpassen des Lichtstrahlausschnittes und/oder durch Übereinanderanordnen mehrerer Meßpaare (1,1',26) berücksichtigt werden.

## Claims

1. Optical measurement apparatus for determining the shape and/or position of an object introduced into the measurement device or capable of being run through it, in particular a pre-coiled object of the nature of wire (16), such as, for example, an eroder wire or a fibre optic conductor, with:
- A pair of measuring elements (1, 1', 26), which feature a light source (A) and at least one light detector (B, D) to form a light beam path; and
- A device arranged in the light beam path for the linearisation of the lateral light intensity distribution of the light beam,
characterised in that
- A fibre optic conductor (4) is arranged in the light beam path between the light source (A) and the object (16).

2. Optical measurement apparatus according to Claim 1, characterised in that the device for linearisation of the lateral light intensity distribution is a light mask (10,10') with at least one mask aperture (18, 18').

3. Optical measurement apparatus according to Claim 1 or 2, characterised in that n pairs of measuring elements (1, 1', 26) are arranged in a plane and/or at specific angles to one another, in particular in each case at an angle of 180°/n.

4. Optical measurement apparatus according to Claim 2 or 3, characterised in that, to guide the light beam path, going from the light source (A) to the light detector (B,D), in front of the fibre optic conductor, a first coupling element and/or, after the fibre optic conductor (4), a first lens is arranged, hereinafter referred to as the transmitter lens (6), and/or a light mask (10,10') and/or at least one second lens, hereinafter referred to as the receiver lens (12), and/or at least one further fibre optic conductor (14) and/or at least one second coupling element.

5. Optical measurement apparatus according to Claim 2 or one of Claims 3 and 4, characterised in that the mask aperture (18,18') is designed as essentially rectangular, in which situation the path of at least one of the two side edges of the mask aperture (18,18') aligned perpendicular to the direction of movement of the object (16) being passed through follows a mathematical curve, which takes account of the light intensity distribution of all the light-conductive components (2,4,6,10,10',12,14,20,22,28,30).

6. Optical measurement apparatus according to Claim 5, characterised in that the path of the side edge is that of a segment of a circle, a segment of an ellipse, sinusoidal, or triangular.

7. Optical measurement apparatus according to Claim 2 or one of Claims 3 to 6, as a dependency of Claim 2, characterised in that the mask aperture (18,18') can be changed in its geometrical shape during the operation of the measurement apparatus.

8. Optical measurement apparatus according to Claim 7, characterised in that the path of at least one of the side edges is capable of adjustment or regulation with the aid of at least one actuator, in particular a bi-metallic element, a shape-recollection metal element, or a piezo-electric actuator.

9. Optical measurement apparatus according to Claim 7 or 8, characterised in that the mask aperture (18,18') is capable of adjustment or regulation in its width by means of at least one actuator.

10. Optical measurement apparatus according to Claim 2 or one of Claims 3 to 9, as a dependency of Claim 2, characterised in that the light mask (10,10') is produced by erosion or lithographically in silicon technique.

11. Optical measurement apparatus according to Claim 4 or one of Claims 5 to 10, as a dependency of Claim 4, characterised in that the lenses (6, 12, 28, 30) are designed to be self-focusing.

12. Optical measurement apparatus according to Claim 4 or one of Claims 5 to 11, as a dependency of Claim 4, characterised in that the transmitter lens (6) is designed to create a parallel light bundle and the receiver lens (12,28,30) is designed to accommodate only parallel impinging light.

13. Optical measurement apparatus according to Claim 4 or one of Claims 5 to 12, as a dependency of Claim 4, characterised in that the first and the second coupling element, as a minimum, are incorporated in a temperature-stable coupling block (2).

14. Optical measurement apparatus according to Claim 4 or one of Claims 5 to 13, as a dependency of Claim 4, characterised in that at least two mutually-opposed triangular lenses (28,30) are arranged behind an essentially rectangular mask aperture (18) of the light mask (10,10'), which are connected in each case by the additional fibre optic conductor and a coupling element to one light detector in each case (B,D).

15. Optical measurement apparatus according to one of the foregoing Claims, characterised in that the light detectors (B,D) are connected to an evaluation device, which is designed to determine the position and/or the shape of the object (16) in the measurement apparatus.

16. Optical measurement apparatus according to Claim 2 or one of Claims 3 to 15, as a dependency of Claim 2, characterised in that the light mask (10,10') features a second, and in particular rectangular, reference mask aperture (24) for measurement norming.

17. Optical measurement apparatus according to one of the foregoing Claims, characterised in that the light source (A) is a monochromatic laser or a light-emitting diode and/or the light detector (B,D) is a photodiode.

18. Process for the determination of the shape and/or position of an object (16), in particular for the determination of the shape or position respectively of an eroding wire, in which:
- The shape/position of the object (16) is determined by means of its shadowing in the light beam path between at least one of a pair of measuring elements (1, 1', 26) consisting of a light source (A) and a light detector (B, D); and
- The lateral light intensity distribution of the light beam is linearised in the light beam path,
characterised in that
- The light beam is conducted between the light source (A) and the object (16) by means of a fibre optic conductor (4).

19. Process according to Claim 18, characterised in that a specifically anticipated shape, in particular a defect, in the object (16) can be taken into account by adapting the light beam cutout and/or by several pairs of measurement elements (1,1',26) being superimposed on one another.

## Revendications

1. Dispositif optique de mesure pour la détermination de la forme et/ou de la position d'un objet introduit, ou qu'il est possible de faire passer, dans le dispositif de mesure, en particulier d'un objet (16) en forme de fil métallique pouvant être avancé par bobinage, tel que par exemple un fil d'érosion ou un conducteur à fibre optique, comprenant :
- un groupe de deux éléments de mesure (1, 1', 26) qui comprend une source lumineuse (A) ainsi qu'au moins un détecteur de lumière (B, D) pour la reproduction d'une marche d'un faisceau lumineux ; et
- un dispositif disposé dans la marche du rayon lumineux pour linéariser la distribution latérale de l'intensité lumineuse du faisceau de lumière,
caractérisé en ce que
- un guide d'ondes lumineuses (4) est disposé dans la marche du faisceau lumineux entre la source lumineuse (A) et l'objet (16).

2. Dispositif optique de mesure selon la revendication 1, caractérisé en ce que le dispositif destiné à linéariser la distribution latérale de l'intensité lumineuse est un cache-lumière (10, 10') comprenant au moins un trou de cache (18, 18').

3. Dispositif optique de mesure selon la revendication 1 ou 2, caractérisé en ce que n groupes de deux éléments de mesure (1, 1', 26) sont disposés dans un plan et/ou sous des angles déterminés, en particulier sous un angle de 180°/n les uns par rapport aux autres.

4. Dispositif optique de mesure selon la revendication 2 ou 3, caractérisé en ce que. pour le guidage de la marche du rayon lumineux - à partir de la source lumineuse (A) jusqu'au détecteur de lumière (B, D)-, un premier élément de couplage est disposé devant le guide d'ondes lumineuses et/ou une première lentille - désignée par la suite lentille émettrice (6) - et/ou un cache-lumière (10, 10') et/ou au moins une deuxième lentille-désignée par la suite lentille réceptrice (12) - et/ou au moins un autre guide d'ondes lumineuses (14) et/ou au moins un deuxième organe de couplage sont disposés derrière le guide d'ondes lumineuses (4).

5. Dispositif optique de mesure selon la revendication 2 ou l'une des revendications 3 et 4 dépendantes de la revendication 2, caractérisé en ce que le trou (18, 18') du cache est sensiblement rectangulaire, le tracé d'au moins l'un des deux bords latéraux du trou (18, 18') du cache, qui est orienté perpendiculairement à la direction du mouvement de l'objet (16) pouvant être amené à passer, suit une courbe mathématique qui tient compte de la distribution de l'intensité lumineuse de tous les composants dans lesquels la lumière passe (2, 4, 6, 10, 10', 12, 14, 20, 22, 28, 30).

6. Dispositif optique de mesure selon la revendication 5, caractérisé en ce que le tracé du bord latéral est en forme de segment de cercle, de segment d'ellipse, sinusoïdal ou triangulaire.

7. Dispositif optique de mesure selon la revendication 2 ou l'une des revendications 3 à 6 dépendantes de la revendication 2, caractérisé en ce que le trou (18, 18') du cache présente une forme géométrique variable pendant que le dispositif de mesure est en service.

8. Dispositif optique de mesure selon la revendication 7, caractérisé en ce que le tracé de l'au moins un bord latéral est ajustable ou réglable à l'aide d'au moins un organe réglant, en particulier d'une bilame, d'un métal à mémoire ou d'un organe réglant piézoélectrique.

9. Dispositif optique de mesure selon la revendication 7 ou 8, caractérisé en ce que la largeur du trou (18, 18') du cache est ajustable ou réglable par au moins un organe réglant.

10. Dispositif optique de mesure selon la revendication 2 ou l'une des revendications 3 à 9 dépendantes de la revendication 2, caractérisé en ce que le cache-lumière (10, 10') est réalisé par érodage ou par voie lithographique en technique du silicium.

11. Dispositif optique de mesure selon la revendication 4 ou l'une des revendications 5 à 10 dépendantes de la revendication 4, caractérisé en ce que les lentilles (6, 12, 28, 30) sont réalisées de manière à être auto-focalisantes.

12. Dispositif optique de mesure selon la revendication 4 ou l'une des revendications 5 à 11 dépendantes de la revendication 4, caractérisé en ce que la lentille émettrice (6) est conçue pour générer un faisceau lumineux parallèle et la lentille réceptrice (12, 28, 30) est conçue pour ne capter qu'une lumière incidente parallèle.

13. Dispositif optique de mesure selon la revendication 4 ou l'une des revendications 5 à 12 dépendantes de la revendication 4, caractérisé en ce que le premier et l'au moins deuxième organe de couplage sont réunis dans un bloc de couplage (2) dont la température est stable.

14. Dispositif optique de mesure selon la revendication 4 ou l'une des revendications 5 à 13 dépendantes de la revendication 4, caractérisé en ce qu'au moins deux lentilles opposées de forme triangulaire (28, 30) sont disposées derrière un trou sensiblement rectangulaire (18) du cache-lumière (10, 10') et chacune d'elles est raccordée à un détecteur de lumière (B, D) dans chaque cas par l'autre guide d'ondes lumineuses et par un organe de couplage.

15. Dispositif optique de mesure selon l'une des revendications précédentes, caractérisé en ce que les détecteurs de lumière (B, D) sont raccordés à un dispositif de dépouillement qui est conçu pour la détermination de la position et/ou de la forme de l'objet (16) situé dans le dispositif de mesure.

16. Dispositif optique de mesure selon la revendication 2 ou l'une des revendications 3 à 15 dépendantes de la revendication 2, caractérisé en ce que le cache-lumière (10, 10') comprend un deuxième trou de référence (24), en particulier rectangulaire, du cache pour la standardisation des mesures.

17. Dispositif optique de mesure selon l'une des revendications précédentes, caractérisé en ce que la source lumineuse (A) est un laser monochromatique ou une diode électroluminescente et/ou le détecteur de lumière (B, D) est une photodiode.

18. Procédé de détermination de la forme et/ou de la position d'un objet (16), en particulier pour la détermination de la forme ou de la position d'un fil métallique d'érosion, suivant lequel :
- la forme/position de l'objet (16) est déterminée par la projection de son ombre dans la marche d'un faisceau lumineux entre au moins deux éléments de mesure (1, 1'. 28) consistant en une source lumineuse (A) et un détecteur de lumière (B. D) ; et
- la distribution latérale de l'intensité lumineuse du faisceau lumineux est linéarisée dans la marche du faisceau lumineux, caractérisé en ce que
- le faisceau lumineux est guidé au moyen d'un guide d'ondes lumineuses (4) entre la source lumineuse (A) et l'objet (16).

19. Procédé selon la revendication 18, caractérisé en ce qu'il est tenu compte d'une forme déterminée devant être escomptée, en particulier d'un défaut de l'objet (16), par adaptation de la section du faisceau lumineux et/ou par superposition de plusieurs groupes de deux éléments de mesure (1, 1', 26).
